Europäisches Patentamt

European Patent Office

Office européen des brevets

(11) Veröffentlichungsnummer: **0 270 887**
**A2**

(12) **EUROPÄISCHE PATENTANMELDUNG**

(21) Anmeldenummer: **87117043.7**

(22) Anmeldetag: **19.11.87**

(51) Int. Cl.⁴: **G06J 1/00**

(30) Priorität: **10.12.86 DE 3642117**

(43) Veröffentlichungstag der Anmeldung:
**15.06.88 Patentblatt 88/24**

(84) Benannte Vertragsstaaten:
**FR GB**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Jovanovic, Michael
Cuxhavener Strasse 64 b
D-2104 Hamburg(DE)**

(54) **Anordnung zur digitalen Verarbeitung von Eingangsgrössen in einem Flugzeug.**

(57) Bei einer Anordnungng zur digitalen Verarbeitung von analogen und/oder digitalen Eingangsgrößen zu analogen und/oder digitalen Ausgangsgrößen, insbesondere in einem Flugzeug, wobei die Eingangs-und Ausgangsgrößen zu unterschiedlichen Systemen gehören, und die Anordnung mindestens einen A/D-Wandler für analoge und diskrete Eingangssignale, mindestens einen digitalen Rechner sowie mindestens einen D/A-Wandler für die analogen und die diskreten Ausgangssignale mit den zugehörigen Treiberstufen aufweisen und die Rechner in bekannter Weise mittels Steckkarten aufgebaut sind besteht die Erfindung darin, daß die Rechner 1, 2, 3 aller Systeme in einer rein digitalen Einheit 14 zusammengefaßt sind.

Hierdurch ergeben sich Vereinfachungen bei der Herstellung einer derartigen Anordnung, Vorteile bezüglich deren Wartbarkeit sowie eine weniger aufwendige Stromversorgung.

EP 0 270 887 A2

FIG.2

## Anordnung zur digitalen Verarbeitung von Eingangsgrößen in einem Flugzeug

Die Erfindung bezieht sich auf eine Anordnung nach dem Oberbegriff des Anspruchs 1.

Derartige Anordnungen sind aus Steckkarten aufgebaut und dienen der Aufbereitung und Verarbeitung digitaler Signale, insbesondere für Autopilot, Flugsteuerung, Navigation, Stabilisierung u.s.w. Dabei bilden alle zur Durchführung der entsprechenden Funktionen erforderlichen Einheiten jeweils ein eigenes System. Als Eingangsgrößen sind sowohl digitale als auch analoge sowie diskrete Signale üblich. Eine entsprechende Vielfalt von Signalen unterschiedlicher Art liegt an den Ausgängen einer derartigen Anordnung vor, wobei sehr häufig elektrische Antriebe oder Stellglieder über derartige Ausgänge angesteuert werden. Aufgrund dieser Anhäufung unterschiedlicher Funktionsarten ergibt sich ein Aufbau der Anordnung, der charakterisiert ist durch eine entsprechende Vielfalt der Steckkarten, aus denen die einzelnen Rechner aufgebaut sind. Durch die relativ große Anzahl unterschiedlicher Steckkarten ergibt sich eine aufwendige Lagerhaltung sowie eine erschwerte Wartbarkeit der betreffenden Geräte. Weiterhin sind derartige Anordnungen recht aufwendig bezüglich der betreffenden Herstellkosten.

Demgemäß liegt der Erfindung die Aufgabe zugrunde, eine gattungsgemäße Anordnung derart auszubilden, daß diese aus Steckkarten aufgebaut ist, die mechanisch weitgehend von identischem Aufbau sind.

Diese Aufgabe ist bei einer gattungsgemäßen Anordnung durch die kennzeichnenden Merkmale des Anspruchs 1 gelöst. Vorteilhafte Weiterbildungen der Erfindung sind in den Unteransprüchen angegeben.

Dabei besteht eine vorteilhafte Wirkung darin, daß electrische Energieleitungen zur Ansteuerung von Motoren, Ventilen u.s.w. nicht mehr über die Anordnung geführt werden. Weiterhin wird die mehrfache A/D-Wandlung bestimmter Größen vermieden.

Die Erfindung ist anhand der Zeichnung dargestellt und in der Beispielbeschreibung näher erläutert. Es zeigen

Fig. 1 ein Blockschaltbild eines digitalen Flugrechner-Systems nach Stand der Technik,

Fig. 2 ein Blockschaltbild eines gleichwertigen Systems, jedoch erfindunsgemäß ausgebildet und

Fig. 3 eine perspektivische Ansicht eines Systems nach Fig 2.

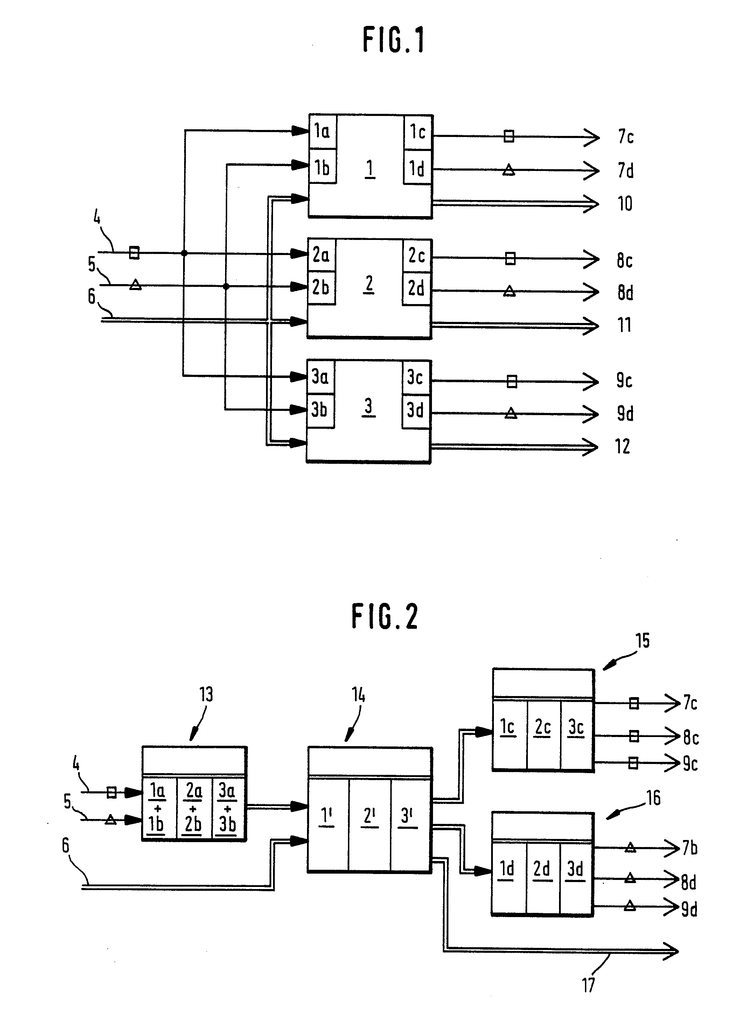

Figur 1 zeigt beispielhaft ein digitales Flugrechner-System nach Stand der Technik, bestehen aus einem Flugsteuerungsrechner 1, einem Schubrechner 2 und einem Stabilisierungsrechner 3. Diese Rechner sind intern jeweils aus mehreren nicht gezeigten Einzelrechnern aufgebaut, um deren Zuverlässigkeit zu erhöhen. Die Eingänge der Rechner 1, 2, 3 sind jeweils mit Informationspfaden 4, 5 und 6 verbunden. Diese Pfade bestehen in der Regel nicht aus einer einzigen Leitung sondern aus einem System von Leitungen. Die am Pfad 4 angebrachte Kennzeichnung mit einem Quadrat besagt, daß über diesen Pfad 4 analoge Signale ankommen. Der durch ein Dreieck markierte Pfad 5 führt diskrete Signale und der durch eine Doppellinie dargestellte Pfad 6 stellt mindestens einen digitalen Datenbus dar. Die rein digital arbeitenden Rechner 1, 2 und 3 sind direkt mit dem Pfad 6 verbunden. Damit die analogen und diskreten Signale in den Rechnern 1, 2 und 3 verarbeitet werden können, sind entsprechende A/D-Wandler 1a, 2a, 3a und 1b, 2b 3b vorgesehen, die die ankommenden Signale in digitale umwandeln. Dem entsprechend werden die Ausgangssignale der Rechner 1, 2 und 3 über entsprechende D/A-Wandler 1c, 2c, 3c und 1d, 2d, 3d auf Ausgangspfade 7c, 8c, 9c und 7d, 8d, 9d gegeben, wobei die von den Rechnern 1, 2, 3 gelieferten digitalen Signale durch diese Wandler wieder in analoge bzw. diskrete Signale umgewandelt werden. Hinsichtlich der Stromversorgung weist eine derartige Anordnung in der Regel außer einem Gleichstromanschluß zu Versorgung der digitalen Bauteile einen Wechselstromanschluß für die Bauteile der Leistungselektronik auf. Diese Bauweise, wodurch elektronische Bauelemente recht unterschiedlicher Art auf den einzelnen Steckkarten untergebracht sind, hat eine Vielzahl unterschiedlich aufgebauter Steckkarten zur Folge.

Figur 2 zeigt nun ein digitales Flugrechner-System, wobei die einzelnen elektronischen Funktions-Einheiten erfindungsgemäß angeordnet sind. Diese Anordnung ergibt sich durch Auslagerung der A/D-Wandler 1a bis 3a und 1b bis 3b und der D/A-Wandler 1c bis 3c und 1d bis 3d aus den Rechnern 1, 2 und 3 nach Fig 1. Daher zeigt dieses Bild vier Funktionseinheiten 13, 14, 15 und 16. Durch prinzipielle Übernahme der Bezugszeichen der verschiedenen Wandler aus Fig. 1 in die Fig. 2 erkennt man, daß nun alle A/D-und D/A-Wandler außerhalb der Einheiten 1', 2' und 3' angeordnet sind. Die Eingangssignale kommen wieder über die Pfade 4, 5 und 6 an, wobei über die Pfade 4 und 5 analoge bzw. diskrete Signale und über den Pfad 6 wieder digitale Signale ankommen. Die Ausgänge dieser Anordnung sind wieder mit Pfaden entsprechend Fig. 1 verbunden. So steht die Einheit 15 mit den Pfaden 7c, 8c und 9c und die Einheit 16 mit den Pfaden 7d,8d und 9d in Verbindung. Dabei deuten das Quadrat und das Dreieck an, daß die im Bild oberen Pfade analoge und die entsprechend unteren Pfade diskrete Signale führen. Die wesentlichen Vorteile dieser Anordnung ergeben sich aus der durch die obige Ausgliederung erreichten Schaffung des rein digitalen Teils 14 der Anordnung. Diese Einheit 14, enthält jetzt nur noch die drei Digitalrechner 1', 2' und 3', die die Funktionen der ursprünglichen Rechner 1, 2 und 3 übernehmen. Bei Anwendung digital ansteuerbarer Servomotore bzw. Ventile im Flugzeug sind die betreffenden D/A-Wandler-Einheiten 15, 24, 25 nur noch in stark vereinfachter Form, oder überhaupt nicht mehr erfoderlich, was einen weiteren erheblichen Vorteil der Erfindung darstellt. Mechanisch ist die Einheit 14 in einem Gehäuse angeordnet, das bezüglich der Einbaumaße und der elektronischen Anschlüsse luftfahrtüblich ausgeführt ist. Das Gehäuse der Einheit 14 kann z.B. der Norm Arinc 600 entsprechen, in der unter anderem die äußeren Abmessungen und die elektrischen Anschlüsse festgelegt sind. Die Rechner 1', 2' und 3' können dabei zur Erhöhung der Zuverlässigkeit in der Regel jeweils aus zwei Einzelrechnern aufgebaut sein. Aufgrund der erfindungsgemäßen Ausbildung der Einheit 14 kann diese nun weitgehend aus gleichartigen Steckkarten aufgebaut werden. Teilt man die Steckkarten in von ihren Funktionen her bestimmte Gruppen ein, so sind Rechnerkarten, Speicherkarten und Interface-Karten denkbar. Aufgrund der Erfindung werden die Karten jeder dieser Gruppen untereinander bezüglich der Bestückung mit Schaltelementen und bezüglich der Auslegung der Schaltung identisch ausgeführt. Hierdurch ergeben sich wesentliche Vorteile bei der Fertigung dieser Karten, so daß deren Herstellkosten wesentlich gesenkt werden können. Trotz der mechanischen Identität der Steckkarten einer Gruppe, können diese jedoch Unterschiede bezüglich der eingegeben Funktions-Software aufweisen. Da die betreffende Programmierung im Anschluß an die mechanische Fertigung der Karten durch rein elektronische Maßnahmen erfolgt, ist dies aus fertigungstechnischer Sicht mit sehr geringem Aufwand durchführbar. Die lokale Anordnung der Wandler 1a bis 1d, 2a bis 2d und 3a bis 3d ist beliebig, sofern sich diese nur außerhalb der Einheit 14 befinden.

Bei einer derartigen Anordnung mit mehreren eigenständig arbeitenden innerhalb eines Gehäuses angeordneten Digitalrechnern ist zur Erhöhung der Zuverlässigkeit für jeden Rechner 1', 2', 3' eine eigene hier nicht gezeigte Stromversorgungseinheit vorgesehen.

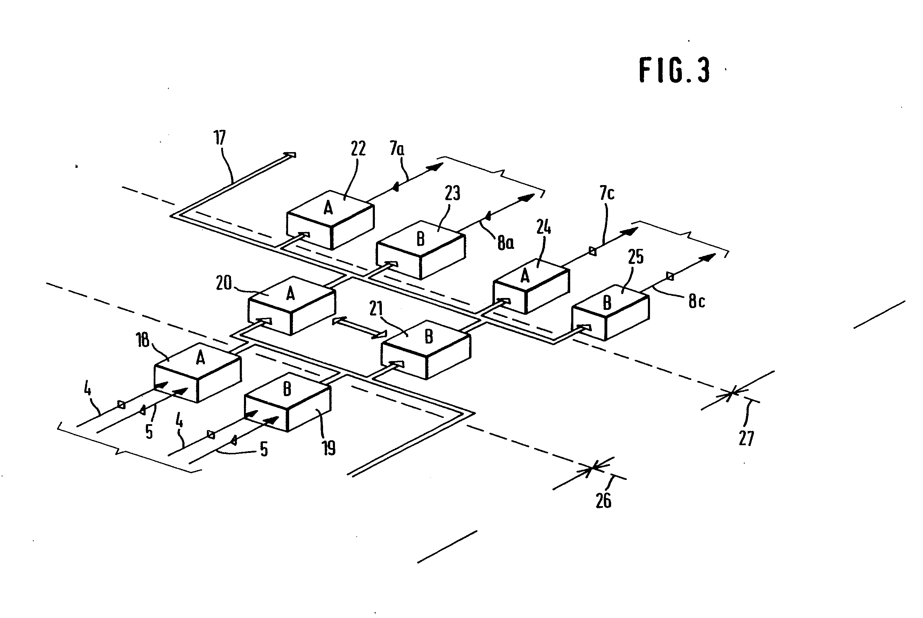

Figur 3 zeigt im Prinzip eine Anordnung nach Fig. 2, allerdings als Duplex-System, bestehend aus zwei Untersystemen A und B, die zur Steigerung der Zuverlässigkeit zusammengeschaltet sind.

Dabei sind die nicht digitalen Eingangspfade wieder mit 4 und 5 bezeichnet. Die betreffenden analogen und diskreten Eingangssignale werden in Wandlereinheiten 18, 19 in digitale Signale umgewandelt, die dann zur weiteren Verarbeitung in die mit 20 und 21 bezeichneten digitalen Rechnereinheiten gelangen, denen auch die über den Pfad 6 ankommenden digitalen Signale direkt zugeführt werden. Die Ausgänge der Digitalrechner 20 und 21 sind mit Wandlereinheiten 22, 23, 24 und 25 verbunden, an denen die Ausgangspfade 7a, 8a, 7c und 8c angeschlossen sind. Diese Anordnung läßt sich in drei Bereiche einteilen, und zwar in einen nicht digitalen Eingangsbereich links von der gestrichelten Linie 26, in einen zwischen den beiden gestrichelten Linien 28 und 27 befindlichen digitalen Verarbeitungsbereich und in einen nicht digitalen Ausgangsbereich, der sich rechts von der Linie 27 befindet.

Die über den Pfad 6 ankommenden Digitalsignale können von allen bekannten bordseitigen, einen digitalen Datenbus aufweisenden Systemen stammen, wie IRS (Inertial reference system), ADC (Air data computer), R/A (Radio altimeter), ILS (Instrument landing system) u.s.w., wobei die Ausgangssignale über den Pfad 17 an die betreffenden Funktionseinheiten, wie EFIS (Electronic flight instrument system), ECAM (Electronic centralized aircraft monitoring) usw. weitergeleitet werden.

Die Rechnereinheiten 22 und 23 weisen, wie gezeigt, jeweils ein eigenes Gehäuse auf und sind in der Regel innerhalb des Haupt-Rechnergestells des Flugzeuges angeordnet. Die gezeigten Wandlereinheiten sind sind dagegen in der Nähe oder innerhalb der systemgebundenen Funktionseinheiten, wie Servomotoren, Ventile usw. angebracht. Hierdurch kann die Länge der verlegten elektrischen Energieleitungen in vielen Fällen reduziert werden.

Die Erfindung ist nicht auf die gezeigten und beschriebenen Beispielausführungen beschränkt; sie erstreckt sich vielmehr auf alle Ausgestaltungen, die im Rahmen der Ansprüche denkbar sind.

## Ansprüche

1. Anordnung zur digitalen Verarbeitung von analogen und/oder digitalen Eingangsgrößen zu analogen und/oder digitalen Ausgangsgrößen, insbesondere in einem Flugzeug, wobei die Eingangs- und Ausgangsgrößen zu unterschiedlichen Systemen gehören, und die Anordnung mindestens einen A/D-Wandler für analoge und diskrete Eingangssignale, mindestens einen digitalen Rechner sowie mindestens einen D/A-Wandler für die analogen und die diskreten Ausgangssignale mit den zugehörigen Treiberstufen aufweisen und die Rechner in bekannter Weise mittels Steckkarten aufgebaut sind, dadurch **gekennzeichnet,** daß die Rechner (1,2,3) aller Systeme in einer rein digitalen Einheit (14,20,21) zusammengefaßt sind.

2. Anordnung nach Anspruch 1, dadurch **gekennzeichnet,** daß die A/D-Wandler (1a,1b,2a,2b,3a,3b) für die analogen und diskreten Eingangssignale in andere systemgebundene Einheiten (13,18,19) ausgelagert sind.

3. Anordnunmg nach Anspruch 1 oder 2 dadurch **gekennzeichnet,** daß die D/A-Wandler (1c,1d,2c,2d,3c,3d) für die analogen und die diskreten Ausgangssignale mit den zugehörigen Treiberstufen in andere systemgebundene Einheiten (15,16,-22,23 24,25) ausgelagert sind.

4.Anordnung nach einem der Ansprüche 1 bis 3, dadurch **gekennzeichnet,** daß die einzelnen Rechner (1',2',3',-20,21) aus gleichartigen Steckkarten aufgebaut sind.

5. Anordnunmg nach einem der Ansprüche 1 bis 4 dadurch **gekennzeichnet,** daß die Gesamtanzahl der Steckkarten einen oder mehrere Kartentypen umfaßt, die jeweils untereinander von mechanisch gleichem Aufbau sind.

6. Anordnung nach einem der Ansprüche 1 bis 5, dadurch **gekennzeichnet,** daß für jeden Rechner (1',2',3',20,21) eine eigene Stromversorgungseinheit vorgesehen ist.

# FIG.1

| | | |
|---|---|---|
| 1a | | 1c | → 7c |
| 1b | **1** | 1d | → 7d |
| | | | → 10 |

| | | |
|---|---|---|
| 2a | | 2c | → 8c |
| 2b | **2** | 2d | → 8d |
| | | | → 11 |

| | | |
|---|---|---|
| 3a | | 3c | → 9c |
| 3b | **3** | 3d | → 9d |
| | | | → 12 |

4
5
6

# FIG.2

4
5
6

13

| 1a + 1b | 2a + 2b | 3a + 3b |
|---|---|---|

14

| 1' | 2' | 3' |
|---|---|---|

15

| 1c | 2c | 3c |
|---|---|---|

→ 7c
→ 8c
→ 9c

16

| 1d | 2d | 3d |
|---|---|---|

→ 7b
→ 8d
→ 9d

17

0 270 887

# FIG.3